# EUROPEAN PATENT APPLICATION

(11) **EP 4 613 082 A1**
(43) Date of publication of application: **10.09.2025**
(21) Application number: 25157120.4
(22) Date of filing: 11.02.2025
(51) Int. Cl.: A01B 69/00, A01B 69/04

(54) **WORK VEHICLE**

(30) Priority: 06.03.2024 JP 2024033556
(71) Applicant: Yanmar Holdings Co., Ltd., Osaka-shi, Osaka (JP)
(72) Inventor: YOSHIOKA, Naohito, Okayama-shi (JP); SAKAGUCHI, Yuki, Okayama-shi (JP); TANJI, Mitsuhiro, Okayama-shi (JP); MASUDA, Hiroshi, Okayama-shi (JP)
(74) Representative: Sekiguchi, Kazuya

(57) **Abstract**

[Problem] To provide a technique that enables work to be performed efficiently by a work vehicle that performs work while traveling using a work machine.

[Solution] An exemplary work vehicle is a work vehicle that performs work while traveling using a work machine, and estimates in advance occurrence of a work remaining area which will remain unworked during the work while traveling, and performs notification of an estimation result regarding the work remaining area.

## Description

### TECHNICAL FIELD

The present invention relates to a work vehicle.

### BACKGROUND ART

Conventionally, a work vehicle that appropriately processes so as not to leave any unworked ground which occurs during ground work along a traveling route is known (see, for example, Patent Document 1).

A work vehicle disclosed in Patent Document 1 is configured to perform adjacent work within a work area while traveling with the vehicle body along a traveling route to which arithmetic operation is previously set. After the work vehicle reaches an end point of work within the work area, it determines whether or not there is an unworked ground, and in a case where there is an unworked ground, the work vehicle generates an unworked ground processing traveling route to process work in the unworked ground.

### PRIOR ART DOCUMENT

### PATENT DOCUMENT

Patent Document 1: Japanese Patent Laid-Open No. 2020-195288

### SUMMARY OF INVENTION

### TECHNICAL PROBLEM

In the configuration of Patent Document 1, when there is the unworked ground after the work in the work area is completed, additional work needs to be performed using the unworked ground processing traveling route. Therefore, there is a possibility that working time becomes longer and work efficiency is lowered.

In view of the above, an object of the present invention is to provide a technique that enables work to be performed efficiently by a work vehicle that performs work while traveling using a work machine.

### SOLUTION TO PROBLEM

An exemplary work vehicle of the present invention is a work vehicle that performs work while traveling using a work machine, and estimates in advance occurrence of a work remaining area which will remain unworked during the work while traveling, and performs notification of an estimation result regarding the work remaining area.

### ADVANTAGEOUS EFFECTS OF INVENTION

According to the exemplary present invention, work can be performed efficiently by a work vehicle that performs work while traveling using a work machine.

### BRIEF DESCRIPTION OF DRAWINGS

FIG. 1 is a side view illustrating a schematic configuration of a work vehicle.
FIG. 2 is a block diagram illustrating a schematic configuration of a control device provided in the work vehicle.
FIG. 3 is a diagram schematically illustrating a field and an automatic traveling route.
FIG. 4 is a diagram illustrating a screen example of a display screen displayed on a display device during automatic traveling.
FIG. 5 is a flowchart illustrating a flow of an occurrence suppressing process of a work remaining area executed in the work vehicle.
FIG. 6 is a diagram illustrating a notification example of an estimation result regarding the occurrence of the work remaining area (residual tillage).
FIG. 7 is a diagram illustrating another notification example of the estimation result regarding the occurrence of the work remaining area (residual tillage).
FIG. 8 is a diagram illustrating a modification of a case in which the work remaining area is displayed on a camera image.
FIG. 9 is a diagram illustrating a modification of the flowchart illustrated in FIG. 5.

### DESCRIPTION OF EMBODIMENTS

An embodiment of the present invention will be described with reference to the drawings. In the drawings, the same or corresponding parts are denoted by the same reference symbols, and unless there is a particular need to describe the parts, description thereof will not be repeated.

In this specification, the direction is defined as follows: First, the direction in which a work vehicle travels straight ahead is defined as the front-rear direction, and a steering wheel is defined as the front side relative to a driver's seat of the work vehicle. In addition, the right side as seen by a driver (operator) who sits on the driver's seat facing forward is defined as the right, and the left side as seen by the driver (operator) who sits on the driver's seat facing forward is defined as the left, and the left-right direction is defined as the direction orthogonal to the front-rear direction. In addition, the direction orthogonal to the front-rear direction and the left-right direction is defined as the up-down direction, in which the gravity direction is defined as the lower direction and the opposite direction thereto is defined as the upper direction. The above directions are names used merely for the purpose of description and are not intended to limit actual positional relationships and directions.

### 1. Summary of Work Vehicle

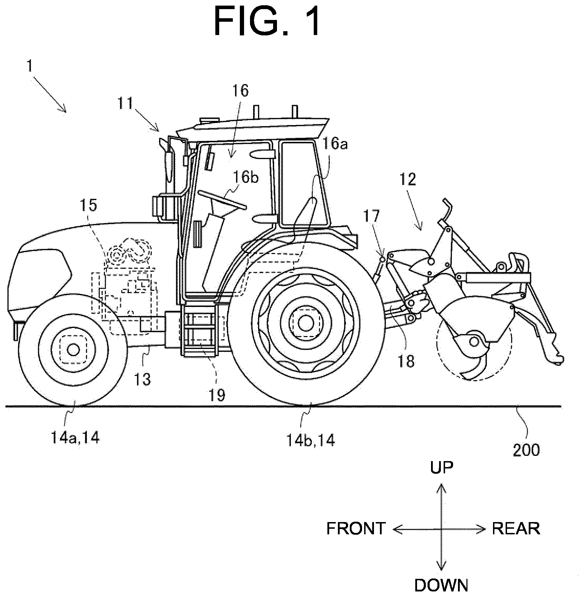

FIG. 1 is a side view illustrating a schematic configuration of a work vehicle 1 according to an embodiment of the present invention. The work vehicle 1 includes a vehicle body 11 and a work machine 12. The vehicle body 11 constitutes a main part of the work vehicle 1 and is capable of traveling in a workplace 200. The work machine 12 is provided by mounting the work machine 12 on the vehicle body 11. The work vehicle 1 performs work while traveling using the work machine 12. The work vehicle 1 performs work while traveling at the workplace 200. In this embodiment, the workplace 200 is a field as an example. That is, the work vehicle 1 is a field work vehicle that performs ground work in the field 200.

In this embodiment, the work machine 12 is mounted on a rear part of the vehicle body 11. The work vehicle 1 in this embodiment is a tractor that pulls the work machine 12 by the vehicle body 11. However, the work machine 12 may be configured to be mounted on a front part of the vehicle body 11. In other words, the work vehicle of the present invention may be configured to have a work machine at the front part of the vehicle body, such as a combine. In a case where the work vehicle is a combine, the ground work is harvesting work.

The vehicle body 11 includes a base unit 13 and a pair of traveling units 14 that support the base unit 13 and are spaced apart from each other in the left-right direction. Each of the left and right traveling units 14 has a front wheel 14a and a rear wheel 14b. At least one of the front wheel 14a and the rear wheel 14b is provided so as to be capable of transmitting driving force from a power source 15 disposed in front of the base unit 13. The transmission of the driving force from the power source 15 to the traveling units 14 enables the vehicle body 11 to travel on the field 200. In this embodiment, the power source 15 is an engine, but is not limited to this and may be a motor or the like. In addition, the pair of traveling units 14 may be configured with crawlers instead of wheels.

The base unit 13 is provided with a driving unit 16 in which the driver sits. That is, the vehicle body 11 includes the driving unit 16. The driving unit 16 is provided with a driver's seat 16a on which the driver sits, a steering wheel 16b disposed in front of the driver's seat 16a to enable the driver to steer the vehicle body 11, and a plurality of operating units (not illustrated) that enable the driver to perform various operations.

The work machine 12 is coupled to the rear of the base unit 13 via a coupling mechanism 17. In this embodiment, the work machine 12 is coupled so as to be able to rise and lower with respect to the base unit 13. At the rear of the base unit 13, a power take-off shaft (PTO shaft) 18 is disposed to output the driving force of the power source 15 to the work machine 12. The driving force of the power source 15 is transmitted to the PTO shaft 18 via a transmission 19. The power source for driving the work machine 12 may be provided separately from the power source for causing the vehicle body 11 to travel.

In this embodiment, the work machine 12 is a rotary tiller. The ground work performed by the work vehicle 1 is tilling work. However, the work machine 12 is not limited to the rotary tiller, but may be a plow, a harvester, a tilling work machine (drive harrow), a chemical applicator, a fertilizer distributor, or the like. Furthermore, the work vehicle 1 may be provided such that a plurality of types of the work machines 12 can be interchangeably mounted.

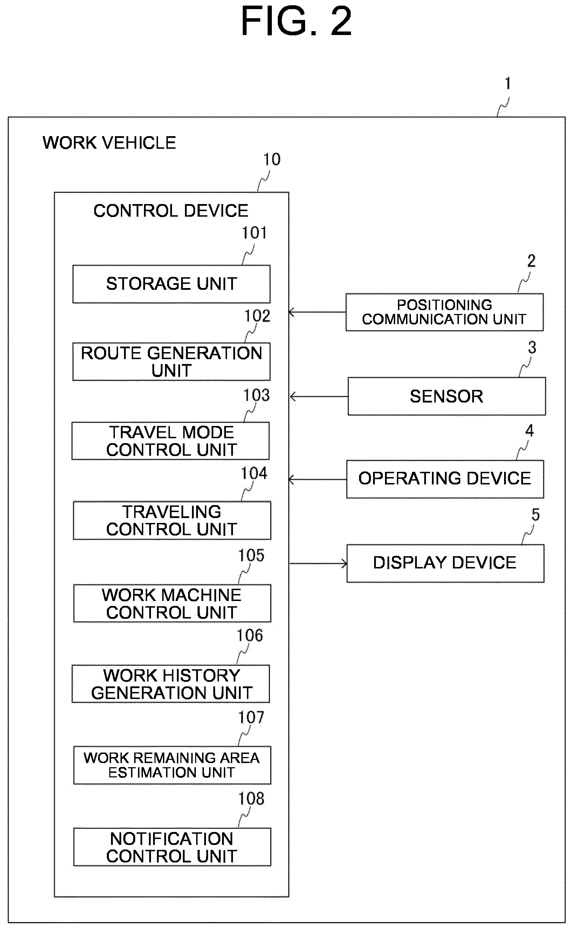

FIG. 2 is a block diagram illustrating a schematic configuration of a control device 10 provided in the work vehicle 1 according to the embodiment of the present invention. The control device 10 is, for example, a computer device including an arithmetic operation unit, an input/output unit, and a storage unit 101. The arithmetic operation unit is an integrated circuit such as a processor and a microprocessor. The storage unit 101 is a main storage device such as a Read Only Memory (ROM) and a Random Access Memory (RAM). The storage unit 101 may further include an auxiliary storage device such as a Hard Disk Drive (HDD) or a Solid State Drive (SSD). The storage unit 101 stores various programs and data. The arithmetic operation unit reads various programs from the storage unit 101 and executes an arithmetic operation process according to the programs.

In this embodiment, the above hardware and software cooperate to actuate the control device 10 as various function units. As illustrated in FIG. 2, the various function units include a route generation unit 102, a travel mode control unit 103, a traveling control unit 104, a work machine control unit 105, a work history generation unit 106, a work remaining area estimation unit 107, and a notification control unit 108.

Each of the function units 102 to 108 provided in the control device 10 may be realized by the arithmetic operation process according to the program executed by the arithmetic operation unit, that is, realized by software, as described above, but may also be realized by other method. At least a part of each of the function units 102 to 108 may be realized, for example, by an Application Specific Integrated Circuit (ASIC) or a Field Programmable Gate Array (FPGA). That is, at least a part of each of the function units 102 to 108 may be realized by hardware using a dedicated IC or the like. In addition, at least a part of each of the function units 102 to 108 may be realized using combination of software and hardware. In addition, each of the function units 102 to 108 is a conceptual component. The function performed by one component may be distributed among a plurality of components. In addition, the functions of a plurality of components may be integrated into one component.

In addition, the control device 10 may be composed of one piece of hardware, or may be composed of a plurality of pieces of hardware that can communicate with each other. For example, the work vehicle 1 may include a remote operating device (not illustrated) that enables remote operation by an operator who is away from the vehicle body 11. In such a case, the control device 10 may be configured to be disposed only in the vehicle body 11, or may be configured to be disposed separately on the vehicle body 11 side and on the remote operating device side. The remote operating device is a device that is provided to be capable of communicating with the vehicle body 11, and may be, for example, a tablet terminal, a smartphone, a laptop computer, a remote controller, or the like.

Furthermore, the control device 10 may be provided to be capable of communicating with a server device via a network such as the Internet. In such a case, one or some of the functions of the control device 10 may be realized by a server device. In addition, a part of information stored in the storage unit 101 may be stored in the server device.

FIG. 2 illustrates not only the control device 10 but also elements 2 to 5 that are directly or indirectly connected to the control device 10. These elements 2 to 5 and the control device 10 may be connected, for example, by wire or wirelessly. Furthermore, these elements 2 to 5 may be connected by wire or wirelessly to a device capable of communicating with the control device 10 (such as the above remote operating device and server device) and indirectly connected to the control device 10 via the device capable of communicating.

The positioning communication unit 2 is provided, for example, in the vehicle body 11. The positioning communication unit 2 may be provided in a portable communication terminal (remote operating device) that can be taken out of the vehicle body 11. The positioning communication unit 2 includes a positioning antenna (not illustrated) and acquires the position of the vehicle body 11 as, for example, latitude and longitude information using a positioning signal received by the positioning antenna from a positioning satellite. The positioning communication unit 2 outputs the position information of the vehicle body 11 to the control device 10. For example, the positioning communication unit 2 receives a positioning signal from a reference station (not illustrated) in an appropriate manner, and then performs positioning using a well-known Real Time Kinematic GNSS (RTK-GNSS) method. In addition, the positioning communication unit 2 may perform positioning using the Differential GNSS (DGNSS) method. Also, the vehicle body 11 may be configured to include a quantum compass capable of positioning instead of or in addition to the positioning communication unit 2.

Sensors 3 detect information related to the work vehicle 1 and output the detected information to the control device 10. In detail, a plurality of types of the sensors 3 are installed in the work vehicle 1. Each of the plurality of types of the sensors 3 outputs the detected information to the control device 10. The sensors 3 are installed, for example, in the vehicle body 11 or the work machine 12. In some cases, the sensors 3 may be provided in a portable communication terminal (remote operating device) that can be taken out of the vehicle body 11. The plurality of types of sensors 3 may include, for example, an inertial measurement unit, an ambient condition monitoring sensor, a raising and lowering sensor, and the like.

The inertial measurement unit is a device that includes, for example, a three-axis angular velocity sensor and a three-axis acceleration sensor and can measure the attitude of the vehicle body 11. The ambient condition monitoring sensor is a sensor that monitors a surrounding condition of the vehicle body 11, and may be, for example, a camera, an ultrasonic sensor, a radar, a Light Detection And Ranging (LiDAR), or the like. The raising and lowering sensor is, for example, a sensor that detects the raising and lowering position of the work machine 12.

The operating device 4 is a device that enables an operator such as a driver to give a command to the control device 10. The operating device 4 is provided, for example, in the vehicle body 11. However, in a case where the work vehicle 1 is configured to have a remote operating device, at least a part of the operating device 4 may be provided in the remote operating device. The operating device 4 may be, for example, a button, a lever, a dial, a touch panel, or the like.

The display device 5 displays information appropriately in response to a command from the control device 10. The display device 5 may be, for example, a liquid crystal display, an organic electroluminescence display, or the like. The display device 5 may have a touch panel, and in this case, the display device 5 may function as at least a part of the operating device 4. In a case where the work vehicle 1 is configured to include a remote operating device, the display device 5 may be provided in at least one of the vehicle body 11 and the remote operating device.

Next, the summary of the functions of the control device 10 will be described.

The route generation unit 102 generates an automatic traveling route for allowing the work vehicle 1 to travel automatically. Details of the automatic traveling route will be described later. In this specification, autonomous traveling means that at least steering is performed autonomously to follow a predetermined route by controlling a device related to traveling by the control device 10 provided in the work vehicle 1. However, the automatic traveling may be configured such that, in addition to steering, at least one of adjustment of vehicle speed and work by the work machine 12 is performed autonomously.

The travel mode control unit 103 controls switching between a manual travel mode and an automatic travel mode. The switching between the manual travel mode and the automatic travel mode are performed in accordance with an instruction from an operator using the operating device 4, for example. In addition, switching from the automatic travel mode to the manual travel mode may be performed automatically in emergencies, or the like.

In the manual travel mode, traveling operation of the vehicle body 11 and operation of the work machine 12 are performed by operation of an operator. In addition, manual operation by the operator may be performed by the operator who rides on the driving unit 16, or may be performed by the operator using a remote operating device without riding on the driving unit 16. In the automatic travel mode, at least steering is performed automatically, and the adjustment of the vehicle speed and the operation of the work machine 12 are performed by the operation of the control device 10 or manually by the operator. In the automatic travel mode, the operator may or may not ride on the driving unit 16.

The traveling control unit 104 controls a traveling system of the vehicle body 11 in accordance with the travel mode. In a case where the travel mode is the manual travel mode, the traveling control unit 104 controls the traveling system of the vehicle body 11 in accordance with an instruction from the operating device 4. The traveling control unit 104 automatically controls at least a part of the traveling system of the vehicle body 11 in a case where the travel mode is the automatic travel mode. The traveling control unit 104 performs automatic steering control (automatic steering) such that at least the vehicle body 11 travels along a predetermined route. During the automatic steering, the position and the orientation of the vehicle body 11 are determined on the basis of information obtained from, for example, the positioning communication unit 2 and the inertial measurement units included in the sensors 3. Then, arithmetic operation related to the automatic steering is performed in accordance with a positional relationship between the obtained position of the vehicle body 11 and the predetermined traveling route for automatic traveling (the traveling route generated by the route generation unit 102), and steering control is performed in accordance with an arithmetic operation result.

The work machine control unit 105 controls a work system of the work vehicle 1 in accordance with an instruction from the operating device 4. The control of the work system includes, for example, raising and lowering control of the work machine 12 and control of switching a power transmission state to the work machine 12 using the PTO power transmission unit. In addition, in a case where the automatic traveling includes autonomously performing work by the work machine 12, the work machine control unit 105 switches the control of the work system of the work vehicle 1 in accordance with the travel mode. That is, in the automatic travel mode, the work machine control unit 105 automatically controls actuation of the work machine 12.

The work history generation unit 106 generates work history information indicating a status of work in a case where work while traveling is performed using the work machine 12. The work history information will be described in detail later. In addition, whether or not work is performed by the work machine 12 can be determined, for example, from information obtained from a raising and lowering sensor (included in the sensors 3) that indicates the position of the work machine 12. The generated work history information is appropriately stored in the storage unit 101.

The work remaining area estimation unit 107 estimates occurrence of a work remaining area during work while traveling using the work machine 12. The work remaining area is an unworked area that remains at an intermediate position without work being performed during the work while traveling using the work machine 12. In a case where the work machine 12 is a tiller as in this embodiment, the work remaining area is a so-called residual tillage. For example, in a case where the work vehicle is a combine, the work remaining area is a reaping remaining area which occurs during reaping work. Details of estimation of the work remaining area will be described later.

The notification control unit 108 controls a notification unit provided in the work vehicle 1. The notification unit includes the above display device 5. However, the notification unit may include, in addition to the display device 5, for example, a sound output device (speaker), a vibration generating device, or a light emitting device. Furthermore, in a case where the work vehicle 1 is configured to include a remote operating device, the notification unit may be configured to be provided in at least one of the vehicle body 11 and the remote operating device. Notification actuation using the display device 5 will be described later.

### 2. Summary of Automatic Traveling

As described above, the work vehicle 1 is provided with the capability of automatic traveling, in which at least steering is performed automatically. The automatic traveling is performed by following an automatic traveling route generated in advance by the route generation unit 102. Herein, an example of the automatic traveling route that is generated in the field 200 will be described.

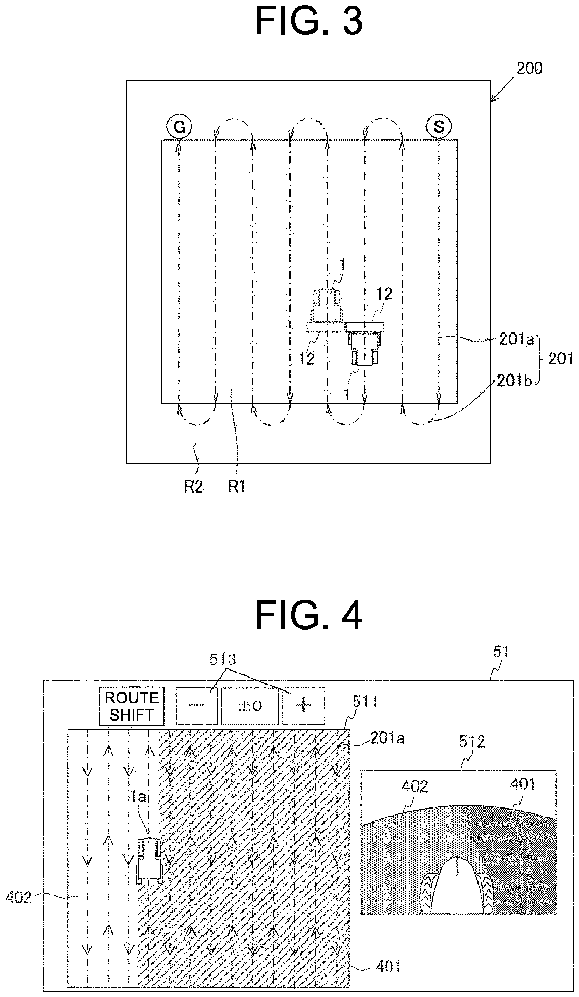

FIG. 3 is a diagram schematically illustrating the field 200 and an automatic traveling route 201. The field 200 includes a work target area R1 and a headland area R2. The work target area R1 is located in a central part of the field 200 and is an area to be worked. The headland area R2 is located outside the work target area R1 and is an area used to properly perform work in the work target area R1.

For example, the headland area R2 is used as an area for moving the work vehicle 1 that enters the field 200 to a start position for plowing work, an area for turning the work vehicle 1, or the like. The work may eventually be performed in the headland area R2 as well.

As a route for allowing the work vehicle 1 to automatically travel, for example, the automatic traveling route 201 illustrated by a dashed line in FIG. 3 is generated by the route generation unit 102. The automatic traveling route 201 is composed of a plurality of straight routes 201a that go straight through the work target area R1 of the field 200 and turning routes 201b that connect the adjacent straight routes 201a. In detail, the straight routes 201a are routes along which work while traveling using the work machine 12 is performed (work routes). In the turning routes 201b, the work while traveling using the work machine 12 is not performed. For example, at the time of traveling on each turning route 201b, the work machine 12 is lifted up so as not to touch the ground.

In FIG. 3, arrows illustrated on the automatic traveling route 201 indicate the traveling direction of the work vehicle 1. In addition, in FIG. 3, "S" indicates a start position of the automatic traveling route, and "G" indicates an end position of the automatic traveling route. In the following description of FIG. 3, a route that proceeds away from the side, on which the start position S is provided, along each straight route 201a is referred to as an outward route, and a route that proceeds from the side opposite to the side on which the start position S is provided, along each straight route 201a is referred to as a return route.

Each straight route 201a is a straight route, and parallel to one side of the contour of the field 200 or the work target area R1, for example. The arrangement intervals between the adjacent straight routes 201a are determined, for example, on the basis of the working width of the work machine 12. The working width is the width in the left-right direction (lateral direction) with which the work (tilling) by the work machine 12 is performed on the ground. It is preferable that each arrangement interval of the adjacent straight routes 201a is determined such that the working width of the work machine 12 provided in the work vehicle 1 which travels on the outward route (see the work vehicle 1 illustrated by a solid line in FIG. 3) and the working width of the work machine 12 provided in the work vehicle 1 which travels on the return route (see the work vehicle 1 illustrated by a broken line in FIG. 3) overlap by a certain width. With such a configuration, it is possible to suppress occurrence of a work remaining area that remains unworked between a post-work area formed by the work while traveling of the outward route and the post-work area formed by the work while traveling of the return route at the time of completion of the work while traveling of the adjacent outward route and return route.

In FIG. 3, the work machine 12 of the work vehicle 1 illustrated by the solid line and the work machine 12 of the work vehicle 1 illustrated by the broken line overlap each other because the interval between the adjacent straight routes 201a is determined such that the above certain width of overlap occurs. The certain width may be a fixed value stored in advance in the storage unit 101, or may be a value that the user (operator) can change arbitrarily. When the certain width is set too large, work efficiency decreases. Therefore, it is preferable to set the certain width as small as possible in such a range as to be able to suppress the occurrence of the work remaining area. The certain width may be set to zero. In other words, it is possible to configure the certain width such that the above overlap does not occur.

The route generation unit 102 sets each straight route 201a of the automatic traveling route 201 to the work route where work is to be performed. The route generation unit 102 sets each turning route 201b to a route where work is not to be performed. In addition, the route generation unit 102 sets the travel direction, the target vehicle speed, the target steering angle, and the like of the vehicle body 11 for each position of the automatic traveling route 201 as necessary. The route generation unit 102 stores the generated automatic traveling route 201 in the storage unit 101. The automatic traveling route 201 stored in the storage unit 101 can be displayed on the display device 5 as appropriate.

When the automatic traveling route 201 is generated, the work vehicle 1 is moved to the start position S, for example, by manual driving. When a command to start automatic traveling is issued using the operating device 4 from the start position S, the work vehicle 1 starts automatic traveling. Consequently, the work vehicle 1 performs outward route traveling from the start position S, turning traveling, return route traveling, and turning traveling again. While repeating this sequence, and the work vehicle 1 performs work while traveling along the straight route 201a until the work vehicle 1 reaches the end position G. Consequently, it is possible to complete the ground work of the work target area R1.

Although the field 200 illustrated in FIG. 3 is rectangular, the field 200 may have other shape. The automatic traveling route 201 illustrated in FIG. 3 is an example. For example, the route for work (work route) may be a curved route rather than a straight route. In addition, the turning routes 201b may not be included in the automatic traveling route, but may be routes that are manually driven by a worker.

FIG. 4 is a diagram illustrating a screen example of a display screen 51 displayed on the display device 5 during automatic traveling. In the example illustrated in FIG. 4, a map image 511 and a camera image 512 are displayed on a display screen 51 (display device 5). In this example, it is assumed that the sensors 3 (see FIG. 2) provided in the work vehicle 1 include cameras. Furthermore, the cameras are assumed to capture at least a forward view. Also, instead of the camera image 512, an image indicating an image in front of a vehicle may be displayed. In a case where the work vehicle 1 is not mounted with a camera, the above image may be displayed as an emphasis. The image may be a three-dimensional image.

The map image 511 displays a current position of the own vehicle 1 in the field 200 (an example of a workplace) where the vehicle performs work while traveling. In this embodiment, the current position of the own vehicle 1 is, as an example, the current position of the vehicle body 11. In the example illustrated in FIG. 4, the current position of the vehicle body 11 is represented by indicating a work vehicle icon 1a, which imitates the work vehicle 1, on the image where the field 200 is displayed. With movement of the vehicle body 11, a position of the work vehicle icon 1a on the display screen 51 moves. In addition, the map image 511 displays the automatic traveling route 201. In the example illustrated in FIG. 4, the automatic traveling route 201 is indicated by overlaying dashed lines on an image indicating the field 200. By comparing the position of the automatic traveling route 201 with the position of the work vehicle icon 1a, the operator can grasp the detailed position of the work vehicle 1 (vehicle body 11) and the status of automatic traveling.

Arrows in the map image 511 indicate the traveling direction of the vehicle body 11 which automatically travels along the automatic traveling route 201.

In the example illustrated in FIG. 4, an already worked area 401 where work by work while traveling was performed in the past, and an unworked area 402 where work by work while traveling will be done in the future are displayed in the map image 511. The already worked area 401 and the unworked area 402 are obtained on the basis of the current position of the vehicle body 11.

The already worked area 401 can be obtained on the basis of the travel trajectory of the vehicle body 11 obtained from the positioning information of the vehicle body 11 by the positioning communication unit 2 and the working width information of the work machine 12 described above (stored in the storage unit 101). The unworked area 402 can be obtained as an area excluding the already worked area 401 from a total work area determined on the basis of the information related to the work route (straight route) 201a generated by the route generation unit 102 and the working width information of the work machine 12. By displaying the already worked area 401 and the unworked area 402, the operator can easily grasp the working status of the work vehicle 1 which performs automatic traveling work.

Although not illustrated in FIG. 4, a difference in the left-right direction (lateral direction) between the automatic traveling route 201 and the current position of the vehicle body 11 (lateral direction deviation) may be displayed on the display screen 51. Consequently, it is possible to make it easier for the operator to grasp the positional deviation of the vehicle body 11 that performs automatic traveling along the automatic traveling route 201 with respect to the automatic traveling route.

In addition, adjustment buttons ("+" and "-") 513 illustrated as "route shift" in FIG. 4 are equivalent to an instruction unit for instructing route shift. When route shift is performed in response to an instruction from the shift instruction unit 513, the position of the automatic traveling route 201 generated by the route generation unit 102 is shifted in the left-right direction (lateral direction). When the automatic traveling route 201 is shifted in the lateral direction by the route shift, the vehicle body 11 that performs the automatic traveling also moves in the lateral direction accordingly. In other words, it can be said that the work vehicle 1 includes the shift instruction unit 513 that shifts the traveling position of the own vehicle 1 (vehicle body 11) in the lateral direction. By using the route shift, it is possible to adjust, to an appropriate position in field 200, the position of the vehicle body 11 of the work vehicle 1 which automatically travels.

The camera image 512 displays an image of a camera (an example of the sensors 3) that captures at least the front of the own vehicle 1 (vehicle body 11). In the example illustrated in FIG. 4, as the camera image 512, only a front image is displayed on the display screen 51, but a surrounding image other than the front side, such as a rear image, may be displayed on the display screen 51. In the example illustrated in FIG. 4, the map image 511 and the camera image 512 are displayed on the same display screen 51, but may be displayed on switchable separate screens. In addition, either one of the map image 511 and the camera image 512 does not have to be displayed. Further, the map image 511 and the camera image 512 may be displayed by separate display devices.

In the example illustrated in FIG. 4, reference numeral 401 is an already worked area, and reference numeral 402 is an unworked area. As can be seen, by displaying the camera image 512, it is possible to make it easier for the operator to grasp the working state of the work vehicle 1 which performs automatic traveling work. For example, the display of the camera image 512 (screen display by the display device provided in the remote operating device) is valid for an operator who operates the work vehicle 1 using the remote operating device.

However, when the deviation in the left-right direction (lateral direction) between the work route (straight route) 201a generated by the route generation unit 102 and an actual traveling route of the vehicle body 11 is increased, the above work remaining area occurs. In the above configuration in which the already worked area 401 and the unworked area 402 are displayed in the map image 511, and the above configuration in which the camera image 512 is displayed, even viewing the screen, it is not possible to notice the work remaining area until the work remaining area occurs. In addition, in the map image 511, the width of the work remaining area is narrow, and therefore it is difficult to notice the occurrence of the work remaining area. Furthermore, even when the route shift is performed after the fact, it is difficult to grasp how much to shift. It is difficult to grasp the occurrence of a lateral direction deviation using a camera image alone. Furthermore, even when a route shift is performed after the fact, it is difficult to determine how much the route should be shifted.

In this embodiment, the work vehicle 1 is configured to be equipped with technology to suppress the occurrence of a work remaining area, taking the above points into consideration. This will be described below.

### 3. Occurrence Suppression Technology of Work Remaining Area

### 3-1. Summary

In this embodiment, the work remaining area estimation unit 107 (i.e., the control device 10 and the work vehicle 1) estimates in advance the occurrence of the work remaining area that remains unworked during the work while traveling using the work machine 12. The work while traveling mentioned herein is specifically work while traveling by automatic traveling. In addition, the work remaining area is an unworked area that occurs unintentionally during an intermediate stage between start and end of work. Further, estimating in advance refers to estimating occurrence of a work remaining area in the future, not estimating whether or not a work remaining area has occurred after work while traveling.

In this embodiment, the notification control unit 108 (i.e., the control device 10 and the work vehicle 1) performs notification of an estimation result regarding the work remaining area. The configuration may be a configuration in which the notification of the estimation result regarding the work remaining area is performed, for example, only in a case where it is estimated that the work remaining area will occur. However, in addition to the case where it is estimated that the work remaining area will occur, the configuration may be a configuration in which the notification of the estimation result regarding the work remaining area is performed even in a case where it is estimated that the work remaining area will not occur.

According to the configuration of this embodiment, in a case where the work remaining area will occur in the future during work while traveling, the operator can be notified of this in advance. Therefore, the operator can act on the work vehicle 1 such that the work remaining area does not occur, and as a result, the occurrence of the work remaining area can be suppressed. Work efficiency can be improved by eliminating the need to perform additional work on the work remaining area after the work while traveling is completed.

In this embodiment, a means for performing notification of an estimation result of a work remaining area is the display device 5 (see FIG. 2). That is, the work vehicle 1 includes the display device 5 that performs notification of the estimation result regarding the work remaining area. When the notification of the estimation result is performed using the display device 5, the work remaining area that will occur in the future can be visually conveyed as visually intuitively easy understandable information to the operator. However, the means for performing the notification of the estimation result may be a sound output device, a vibration generation device, or a light emitting device, instead of or in addition to the display device 5. In addition, when the work vehicle 1 is operated using a remote operating device, the display device, the sound output device, the vibration generation device, the light emitting device, or the like referred to herein may be configured to be provided in the remote operating device.

In this embodiment, the occurrence of the work remaining area is estimated on the basis of the position information of the own vehicle 1 and the information of the work machine 12. The position information of the own vehicle 1 includes, in detail, the past and future position information of the own vehicle 1. Therefore, it can be said that the work vehicle 1 estimates the occurrence of the work remaining area on the basis of the past and future position information of the own vehicle 1. The information on the work machine 12 includes, in detail, the working width of the work machine 12. In this embodiment, the position information of the own vehicle 1 is the position information of the vehicle body 11, but is not limited to this and may be the position information of the work machine 12 or the position information of the vehicle body 11 and the work machine 12.

Work history information can be obtained by the position information (past position information) of the vehicle body 11 from the start of work while traveling to the present, and the working width of the work machine 12. The work history information is equivalent to the information in the above already worked area 401. In addition, in a case where work while traveling by automatic traveling is performed, the vehicle body 11 travels along the automatic traveling route 201 (see FIG. 3 and the like), and therefore the future position information of the vehicle body 11 can be obtained. Then, from the future position information of the vehicle body 11 and the working width of the work machine 12, a work area due to future work while traveling can be expected. By comparing the work history information (already worked area) with the expected work area (expected work area), it is possible to estimate whether or not the work remaining area (residual tillage in this embodiment) will occur. In addition, in a case where the work remaining area occurs, the position (e.g., a distance from the vehicle body 11) and the size (e.g., the width) of that area can be estimated.

### [3-2. Specific Example]

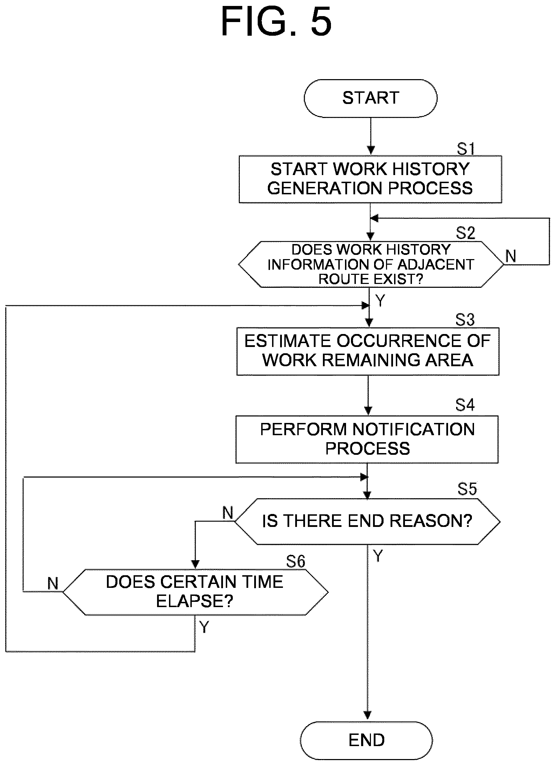

FIG. 5 is a flowchart illustrating a flow of an occurrence suppressing process of the work remaining area executed in the work vehicle 1. The process illustrated in FIG. 5 is started, for example, when the work vehicle 1 starts automatic traveling for tilling work in the field 200.

In Step S1, the work history generation unit 106 starts a process for generating the work history information (work history generation process). The work history generation process is a process for obtaining the already worked area 401 using the travel trajectory of the vehicle body 11 obtained by using the positioning communication unit 2 and the working width of the work machine 12, as described above. When the work history generation process is started, the work history generation unit 106 updates the work history information, for example, at regular time intervals or whenever the vehicle body 11 travels a certain distance. The control device 10 executes the update process as appropriate and proceeds to the next Step S2.

In this embodiment, the generated work history information (already worked area 401) is displayed on the display screen 51 of the display device 5 while being reflected in the map image 511 (see FIG. 4). In addition, the camera image 512 (see FIG. 4) is also displayed on the display screen 51 of the display device 5.

In Step S2, the work remaining area estimation unit 107 monitors whether or not there is work history information of the work route (straight route) 201 a adjacent to the work route 201a on which work while traveling is currently being performed. When there is no work history information (work history of adjacent tillage) of the adjacent work route 201a, it is not possible to estimate whether or not a work remaining area will occur, and therefore this process is executed. In a case where peripheral position information of the work target area R1 in the field 200 is known at the start of the work while traveling by automatic traveling, the occurrence of the work remaining area may be estimated by comparison with the known peripheral position information. That is, the process of Step S2 may be skipped and the occurrence of the work remaining area may be estimated. However, since the work route 201a is usually set taking the peripheral position information of the work target area R1 into account, it is not necessary to estimate the occurrence of the work remaining area before the work history of the adjacent tillage is generated. In a case where there is the work history information of the adjacent route (Yes in Step S2), the process proceeds to the next Step S3. In a case where there is no work history information of the adjacent route (No in Step S2), monitoring in Step S2 continues.

In Step S3, the work remaining area estimation unit 107 estimates the occurrence of the work remaining area. In detail, the work remaining area estimation unit 107 estimates whether or not the work remaining area will occur. Then, the work remaining area estimation unit 107 estimates the occurrence position and the size of the work remaining area in a case where it is estimated that the work remaining area will occur. These estimates can be made on the basis of the work history information (specifically, the work history of adjacent tillage) and the expected work area formed in a case where work while traveling along the current work route 201a is performed, as described above. When the estimation process for the occurrence of the work remaining area is completed, the process proceeds to the next Step S4.

In Step S4, the notification control unit 108 performs the notification process of the estimation result regarding the work remaining area. In this example, the notification process is performed even in a case where it is estimated that no work remaining area will occur. However, in the case where it is estimated that no work remaining area will occur, the notification process may not be performed. Depending on the notification process, the display device 5, which is a notification means, performs notification actuation. An operator who is notified of the occurrence of the work remaining area can make appropriate route shift in accordance with a content of the notification to prevent the occurrence of the work remaining area in advance. A specific example of the notification actuation by the display device 5 will be described below. As described above, the notification means may be sound, vibration, or the like.

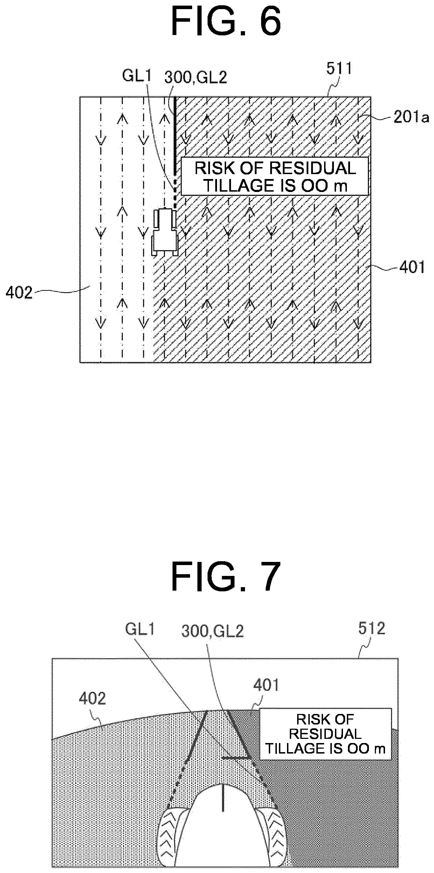

FIG. 6 is a diagram illustrating a notification example of an estimation result regarding the occurrence of the work remaining area (residual tillage). In FIG. 6, the estimated work remaining area 300 is displayed in the map image 511. The map image 511 illustrated in FIG. 6 is the same as the map image 511 described using FIG. 4. The estimated work remaining area 300 is displayed in the map image 511, so that it is possible to intuitively understand that the work remaining area 300 will occur in the future.

In the example illustrated in FIG. 6, the estimated work remaining area 300 is displayed in the map image 511 in a different manner from the already worked area 401 and the unworked area 402. The work remaining area 300 is displayed in a different manner from the other areas 511a and 51 1b, so that the occurrence of the work remaining area 300 can be quickly recognized. Examples of different display manners include changing the color or the type of lines surrounding each area, or changing the color used to fill each area.

In addition, depending on the size of the work remaining area 300, the display manner may be changed, for example, by changing the size (width, or the like) of the work remaining area 300 in the map image 511. Also, to make it easier to understand the size of the work remaining area 300, displaying the numerical value itself or a figure (such as a bar) that makes it easy to see the difference in size at a glance may be employed. Thus, it is possible to becomes easier to determine the amount of shift during route shift that prevents the occurrence of the work remaining area 300, for example. The numerical values and the figures representing the size may be displayed, for example, by being superimposed on the map image 511, or may be displayed around the map image 511.

In the example illustrated in FIG. 6, in detail, two types of guidelines GL1 and GL2 with different display manners are used to illustrate a portion where no work remaining area 300 will occur and a portion where the work remaining area 300 will occur. Consequently, it is possible to easily grasp a distance until the vehicle body 11 reaches the work remaining area 300. In this embodiment, in the estimation as to whether or not the work remaining area 300 will occur, in a case where it is estimated that the work remaining area 300 will not occur, only the guideline GL1 indicating the portion where the work remaining area 300 will not occur is displayed. In the example illustrated in FIG. 6, the two types of the guidelines GL1 and GL2 are configured by changing the line type, but may be distinguished from each other by other methods, such as by using different colors.

In addition, in the example illustrated in FIG. 6, a distance to an occurrence point (position) of the work remaining area 300 is specifically displayed in a pop-up. Therefore, it is possible to easily grasp the timing of route shift such that no work remaining area 300 occurs. Instead of the distance to the occurrence point of the work remaining area 300, time to the occurrence point of the work remaining area 300 may be displayed. Furthermore, the distance and the time may be expressed in concrete numerical values, or may be displayed graphically, such as a bar indicating the change in distance or time. The location where the pop-up display is displayed may be on the map image 511 or outside the map image 511.

For example, when the vehicle body 11 reaches the occurrence point of the work remaining area 300 or immediately before the vehicle body 11 reaches the occurrence point, the operator may be notified that the route shift should be instructed. That is, the work vehicle 1 may be configured to notify that operation of the shift instruction unit 513 (see FIG. 4) should be performed, in a case where the occurrence of the work remaining area 300 is estimated. Consequently, it is possible to increase a possibility that the operator performs operation for preventing the occurrence of the work remaining area 300, and further reduce a possibility that the work remaining area 300 will occur.

A notification to prompt operation of the shift instruction unit 513 may be configured to be performed, for example, using the display device 5. In this case, for example, the text in the pop-up display may be emphasized, or the expression in the pop-up display may be emphasized. In addition, the notification to prompt the operation of the shift instruction unit 513 may be a voice notification or a vibration notification instead of or in addition to the display device 5. The vibration may be configured to vibrate, for example, the driver's seat 16a or an armrest (not illustrated). In a case where the work vehicle 1 is operated using the remote operating device, the remote operating device may be configured to be vibrated.

FIG. 7 is a diagram illustrating another notification example of the estimation result regarding the occurrence of the work remaining area (residual tillage) 300. In FIG. 7, the estimated work remaining area 300 is displayed in the camera image 512. The camera image 512 illustrated in FIG. 7 is the same as the map image 511 described using FIG. 4. As described above, the camera image 512 may be displayed in parallel with the map image 511 on the same screen, or may be displayed on a screen separate from the map image 511. In addition, the camera image 512 may be displayed by a display device other than the display device that displays the map image 511. Further, the configuration in which the estimated work remaining area 300 is displayed in the camera image 512 may be implemented simultaneously with the configuration in which the estimated work remaining area 300 is displayed in the map image 511.

In detail, the estimated work remaining area 300 is superimposed on the camera image 512. The estimated work remaining area 300 superimposed on the camera image 512 is displayed, so that it is possible to intuitively understand that the work remaining area 300 will occur in the future.

As in the case of the map image 511, the display manner may be changed in accordance with the size of the work remaining area 300, for example, by changing the size (such as the width) of the work remaining area 300 in the camera image 512. In addition, to make it easier to understand the size of the work remaining area 300, displaying the numerical value itself or a figure (such as a bar) that makes it easy to see the difference in size at a glance may be employed. The numerical values and the figures representing the size may be displayed, for example, by being superimposed on the camera image 512, or may be displayed around the camera image 512.

In the example illustrated in FIG. 7, as in the case of the example illustrated in FIG. 6, two types of guidelines GL1 and GL2 with different display manners are used to illustrate a portion where no work remaining area 300 will occur and a portion where the work remaining area 300 will occur. In addition, a distance to an occurrence point (position) of the work remaining area 300 is specifically displayed in a pop-up. Effects and modifications of these configurations are similar to those of the map image 511, and therefore detailed description will be omitted.

In addition, in the example (illustrated in FIG. 7) where the estimated work remaining area 300 is displayed in the camera image 512, the guidelines GL1 and GL2 are provided in the left-right direction (lateral direction) of the vehicle body 11, on the side where the work remaining area 300 does not actually occur. This is a device to make it easier to visualize the distance to the occurrence of the work remaining area 300 of the vehicle body 11, and similar to the case of the map image 511, the guidelines GL1 and GL2 may be provided only on the side where the work remaining area 300 occurs.

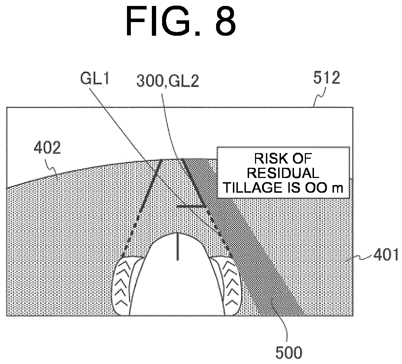

FIG. 8 is a diagram illustrating a modification of a case in which the work remaining area 300 is displayed on the camera image 512. In a case of the camera image 512, it may be difficult to distinguish between the already worked area 401 and the unworked area 402 from images. For example, when plowing is performed or when the field 200 is muddy, it may be difficult to determine a boundary between a portion where work while traveling is performed and a portion where work while traveling not performed, in the camera image 512.

In view of such a point, superposition display 500 for emphasizing an area in the camera image 512 may be performed to emphasize either the already worked area 401 or the unworked area 402 in the camera image 512. In the example illustrated in FIG. 8, the superposition display 500 is performed for the already worked area 401, as an example. In the example illustrated in FIG. 8, the superposition display 500 is configured to display a strip near the boundary, but may be configured in other manner as long as the boundary between the already worked area 401 and the unworked area 402 can be clearly seen.

Returning to FIG. 5, in Step S5, the work remaining area estimation unit 107 determines whether or not there is a reason to terminate the process illustrated in FIG. 5 (reason for termination). Examples of a reason for termination include a case where automatic traveling is terminated due to work completion, a case where an operator issues an instruction that advance notification of the work remaining area 300 is not necessary, and a case where some kind of error occurs and a process cannot be performed. In a case where there is a reason for termination (Yes in Step S5), the process illustrated in FIG. 5 is terminated. In a case where there is no reason for termination (No in Step S5), the process proceeds to the next Step S6.

In Step S6, the work remaining area estimation unit 107 determines whether or not a certain amount of time elapses since the previous estimation of the occurrence of the work remaining area (see Step S3) is performed. In a case where the certain amount of time elapses (No in Step S6), the process returns to Step S5. In a case where the certain amount of time elapses (Yes in Step S6), the process returns to Step S3, and the occurrence of the work remaining area is estimated again. At the time of this estimation, in a case where route shift is performed in response to the previous estimation result, the automatic traveling route 201 after the route shift is used for the estimation process. In addition, instead of the configuration in which the passage of the certain amount of time is determined, for example, a configuration in which it is determined whether the vehicle body 11 travels a certain distance or whether the work route 201a moves to the next route may be employed.

In the above, the configuration in which the occurrence of the work remaining area is estimated is employed, but in addition to this, the configuration in which occurrence of an area where an amount of overlap with an adjacent work area (adjacent tillage) is greater than an expected amount (width) is estimated and notification of a result of the estimation is performed may also be employed. In a case where an area where the amount of overlap exceeds an expected amount occurs, there is a high possibility that a work remaining area will occur when moving to the next work route. Therefore, in a case where it is estimated that the area where the amount of overlap exceeds the expected amount occurs, it is preferable to notify an operator of this and prompt the operator to shift a route. Consequently, it is possible to further reduce the probability of the occurrence of the work remaining area such as a residual tillage.

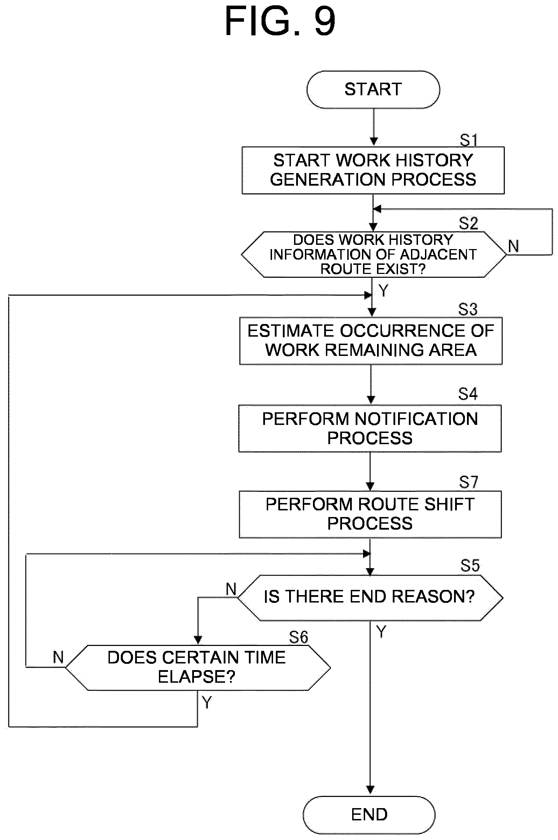

In addition, in the above, in a case where the occurrence of the work remaining area is estimated, it is assumed that the operator is notified of this and the operator shifts the route. However, the route shift may be performed automatically. FIG. 9 is a diagram illustrating a modification of the flowchart illustrated in FIG. 5. As illustrated in FIG. 9, after the estimation process of the occurrence of the work remaining area is performed, the control device 10 may perform a route shift process (Step S7). In FIG. 9, the process is performed in the order of Step S4 and Step S7. However, the processes of Step S4 and Step S7 may be performed simultaneously, or may be performed in the reverse order depending on the circumstances. In addition, in the configuration of the modification, the process of Step S4 may be omitted.

In the route shift process, the route shift is performed at a timing and a shift amount that is automatically determined in accordance with information (estimated information) such as the occurrence position and the size of the work remaining area. In a case where no work remaining area is estimated, the shift amount is set to zero. That is, no route shift is performed. When the route shift is executed, automatic steering is performed accordingly, and the vehicle body 11 moves in the left-right direction (lateral direction) to follow the work route after the shift. That is, in the configuration of the modification, in a case where the occurrence of the work remaining area is estimated, the work vehicle 1 performs automatic steering to suppress the occurrence of the work remaining area. In a case where there is a possibility that the work remaining area will occur in the future, the work vehicle 1 is cause to automatically move, and therefore it is possible to reduce a burden on the operator and prevent the occurrence of the work remaining area.

### 4. Points of Attention

The various technical features disclosed in this specification may be modified in various ways without departing from the spirit of the technical creation. In addition, a plurality of embodiments and modifications indicated in this specification may be combined in a possible range. Furthermore, the field shape illustrated in the drawings is merely an example, and the field shapes may be modified as appropriate.

### 5. Appendixes

An exemplary work vehicle of the present invention is a work vehicle that performs work while traveling using a work machine, and may estimate in advance occurrence of a work remaining area which will remain unworked during the work while traveling, and perform notification of an estimation result regarding the work remaining area (first configuration).

In the work vehicle of the above first configuration, occurrence of the work remaining area may be estimated on the basis of position information of an own vehicle (second configuration).

In the work vehicle of the above second configuration, the position information may be past and future position information (third configuration).

The work vehicle of any of the above first to third configurations may include a display device that performs notification of the estimation result (fourth configuration).

In the work vehicle of the above fourth configuration, a map image which displays a current position of an own vehicle in a workplace where the work while traveling is performed may be displayed on the display device, and the work remaining area estimated may be displayed in the map image (fifth configuration).

In the work vehicle of the above fifth configuration, an already worked area where work by the work while traveling was performed in the past, and an unworked area where work by the work while traveling will be performed in the future, the areas being obtained on the basis of the current position of the own vehicle, may be displayed in the map image, and the work remaining area estimated may be displayed in the map image in a different manner from the already worked area and the unworked area (sixth configuration).

In the work vehicle of any of the above fourth to sixth configurations, a camera image that displays an image of a camera which captures at least a front of an own vehicle may be displayed on the display device, and the work remaining area estimated may be displayed in the camera image (seventh configuration).

The work vehicle of any of the above first to seventh configurations may include a shift instruction unit that shifts a traveling position of an own vehicle in a lateral direction, wherein in a case where occurrence of the work remaining area is estimated, notification to prompt operation of the shift instruction unit may be performed (eighth configuration).

In the work vehicle of any of the above first to seventh configurations, in a case where occurrence of the work remaining area is estimated, automatic steering may be performed (ninth configuration).

### REFERENCE SIGNS LIST

1 work vehicle
5 display device
11 vehicle body
12 work machine
200 field (workplace)
300 work remaining area
401 already worked area
402 unworked area
511 map image
512 camera image
513 shift instruction unit

## Claims

1. A work vehicle that performs work while traveling using a work machine, the work vehicle that:
estimates in advance occurrence of a work remaining area which will remain unworked during the work while traveling; and
performs notification of an estimation result regarding the work remaining area.

2. The work vehicle according to claim 1, wherein occurrence of the work remaining area is estimated on the basis of position information of an own vehicle.

3. The work vehicle according to claim 2, wherein the position information is past and future position information.

4. The work vehicle according to claim 1, comprising a display device that performs notification of the estimation result.

5. The work vehicle according to claim 4, wherein a map image which displays a current position of an own vehicle in a workplace where the work while traveling is performed is displayed on the display device, and
the work remaining area estimated is displayed in the map image.

6. The work vehicle according to claim 5, wherein an already worked area where work by the work while traveling was performed in the past, and an unworked area where work by the work while traveling will be performed in the future, the areas being obtained on the basis of the current position of the own vehicle, are displayed in the map image, and
the work remaining area estimated is displayed in the map image in a different manner from the already worked area and the unworked area.

7. The work vehicle according to claim 4, wherein a camera image that displays an image of a camera which captures at least a front of an own vehicle is displayed on the display device, and
the work remaining area estimated is displayed in the camera image.

8. The work vehicle according to any one of claims 1 to 7, comprising a shift instruction unit that shifts a traveling position of an own vehicle in a lateral direction, wherein
in a case where occurrence of the work remaining area is estimated, notification to prompt operation of the shift instruction unit is performed.

9. The work vehicle according to any one of claims 1 to 7, wherein in a case where occurrence of the work remaining area is estimated, automatic steering is performed.
